# EUROPEAN PATENT SPECIFICATION

(11) **EP 3 597 525 B1**
(45) Date of publication and mention of the grant of the patent: **09.12.2020**
(21) Application number: 18382542.1
(22) Date of filing: 19.07.2018
(51) Int. Cl.: B64C 1/06

(54) **CURVED COMPOSITE PART AND MANUFACTURING METHOD THEREOF**
GEKRÜMMTES VERBUNDSTOFFSTÜCK UND HERSTELLUNGSVERFAHREN DAFÜR
PIÈCE COMPOSITE INCURVÉE ET SON PROCÉDÉ DE FABRICATION

(43) Date of publication of application: 22.01.2020
(73) Proprietor: Airbus Operations, S.L.U., 28906 Getafe (Madrid) (ES)
(72) Inventor: VÁZQUEZ CASTRO, Jesús Javier, 28906 Getafe, Madrid (ES); GARCÍA MARTÍN, Diego, 28906 Getafe, Madrid (ES); FRUTOS MUÑOZ, Ana, 28906 Getafe, Madrid (ES); MARTÍN BRAVO, José, 28906 Getafe, Madrid (ES)
(74) Representative: ABG Intellectual Property Law, S.L.

(56) References cited:
- EP-A1- 2 878 435
- DE-B3-102016 109 284
- US-A1- 2011 097 554
- US-B1- 7 943 076

## Description

### TECHNICAL FIELD OF THE INVENTION

The present invention belongs to the field of structures, and particularly, it belongs to the field of manufacturing a composite part, or a portion thereof, which presents certain curvature. In particular, this composite part fulfils structural requirements, being especially adequate for effective load transferring.

Particularly, the invention provides a curved composite part, a manufacturing method thereof, and an aircraft which comprises the same.

Accordingly, an object of the present invention is to provide said curved composite part, or a portion thereof, manufactured by an automated process and suitable for being integrated in structures, such as frames, beams, spars or ribs with any radius of curvature, and with the proviso that no *mouseholes* shall be present in the final manufactured curved composite part.

### BACKGROUND OF THE INVENTION

Existing aircrafts are composed by primary and secondary structures, depending on how sensitive the aircraft integrity is with respect to a failure in these structures. Thus, structures are classified as 'primary' when they are critical load bearing structure which, in case of severe damage, it may produce failure of the entire aircraft; whilst an structure is called 'secondary' when it is intended for carrying only airflow loads and inertial loads generated on or in the proper secondary structure.

For example, the 'belly fairing' consists of an internal substructure (mainly made of frames and beams), which is attached to the bottom section of the fuselage below the wings, normally by means of rods and/or fittings, and comprising panels covering the aerodynamic surface. Among others, main functions of the belly fairing are to provide aerodynamic shape of the wing-fuselage connection, and to provide sufficient space for systems below the fuselage (e.g. main landing gear or ECS).

Hence, this 'belly fairing' is classified as a secondary structure, comprising widespread C-type components (i.e. their structural requirements relate to their thickness only), except on attachments areas where the components should demonstrate well load distribution/transferring (i.e. classified as B or even A-types), such as:
- panels junction to the substructure,
- substructure attachment with the fuselage, or
- main landing gear contour.

Since belly fairing is subject to agreed maintenance routine, accessibility should be assured. For instance, the external surface is made of panels (preferably sandwich panels) bolted to the substructure and, depending on the accessibility frequency required, different type of removable bolts may be used. In some specific areas, instead of bolted panels, doors may be used.

The mentioned substructure is normally composed by frames and longerons which are joined between them by fittings, panels are attached to, and the final structure is joined by means of rods to the fuselage.

These frames and longerons must follow the external aeroshape of the belly fairing, so the cross-section geometry, typically C-shape or H-shape, may vary from almost a straight section to a curved-twisted one.

Although different manufacturing processes are conventionally used, depending on the particular process, the radius of curvature of these frames and longerons must be limited to a certain value above which, wrinkles normally appear on the compression side in this curved/twisted composite part during, for instance, the pre-forming step in CFRP parts.

In composites, wrinkles are not desirable in the final product as the loads cannot be effectively transferred. Consequently, the allowable composite material stress drops down significantly.

In conventional processes, the pre-forming process (this is, after laminating and before curing) from a flat laminate into a complex geometry (curved/twisted composite part geometry, for instance) some plies at one end of its curved neutral axis tend to get compressed and others tend to be strengthen. Undesirable wrinkling effect takes places on the zones where the plies tend to be compressed.

An extended mitigation measure which helps in the avoidance of the wrinkling effect is the incorporation of mouseholes on such compression side of the curved/twisted composite part, leading to a naturally avoidance of the same due to *in situ* load relaxation.

These mouseholes are understood as through windows within the composite part close to the skin which permits the stringers to have a continuous shape. Nevertheless, attachments areas of the belly fairing panels requires structural stability both for better withstanding loads and for allowing removable bolts (or even the doors) to be securely attached.

Stringers arrangement sacrifices secure attachment of these structural composite parts on these contours, and should be even avoided where doors are envisaged in order to allow an easy aperture. Thus, these structural composite parts are still curved and/or twisted within those contours or attachment areas, but no stringers are present in the skin so as to oblige the composite parts to present mouseholes.

Although wrinkles are common in any composite industry, all the above is emphasized in aeronautics since the aircraft structural behaviour is highly regulated. Therefore, there is a need of manufacturing curved and/or twisted composite parts *-or a portion thereof-* where no *mouseholes* shall be present, and wrinkles are to be avoided.

Document US7943076B1 describes a method of manufacturing curved composite structural elements wherein a curved composite element is laid up over a tool having first and second curved tool surfaces possessing differing radii of curvatures. A plurality of composite fiber ply segments are arranged in substantially side-by-side relationship into a group. The ply segments are formed as a group onto the first curved tool surface, and the group is then formed from the first curved tool surface onto the second curved tool surface

Document US2011/097554A1 describes a curved composite aircraft frame comprising a multi-ply composite laminate having a generally Z-shaped cross section. At least certain of the laminate plies include unidirectional reinforcing fibres that are substantially tangent at substantially all points along the curvature of the frame.

Document DE102016109284B3 describes an arcuate fibre composite plastic preform for the production of curved profiles.

Document EP2878435A1 describes an integrated composite trailing edge and its method of manufacturing.

### SUMMARY OF THE INVENTION

The present invention provides a solution for the aforementioned problems by a method for manufacturing a curved composite part according to claim 1, a curved composite part according to claim 12 and an aircraft according to claim 13. In dependent claims, preferred embodiments of the invention are defined.

In a first inventive aspect, the invention provides a method for manufacturing a curved composite part, said curved composite part at least comprising:
a curved web with an inner edge and an outer edge, wherein said outer edge is longer than said inner edge, and
an outer cap close to such outer edge end of the curved web, and adapted to provide a continuous surface to be joined to a skin;
wherein the method comprises the steps of:
- providing a tool adapted to support at least one preform, and to form them up to their final shape before curing;
- laying up a first flat preform composed by a set of plies stacked, such preform comprising at least one folding line substantially parallel to the neutral axis of the curved composite part, an outer folding line dividing the first flat preform into:
   o a curved web for being part of the curved web of the curved composite part, and
   o a flange for being part of the outer cap of the curved composite part;
   in such a way that at least one ply is provided with at least one discontinuity within the flange zone, such at least one discontinuity being substantially perpendicular to the folding line and being initiated from the free end;
- bending in a form-up step the first flat preform by the folding line; and
- curing the at least one formed-up preform, the curved composite part being manufactured.

Throughout this entire document, a 'curved composite part' should be understood as any typical aeronautical part such as a frame, a longeron or beam, a spar, or a rib *-or a portion thereof-* with any radius of curvature. That is, the neutral axis of said curved composite part once positioned in its intended place of the aircraft and sustaining loads without deformation, is of any geometry but straight.

In a preferred embodiment, this 'curved composite part' has a 'H-shaped', 'C-shaped', 'J-shaped', 'I-shaped', or 'T-shaped' cross-section.

The method according to the present invention comprises various steps which can be performed by different techniques. For instance, the tool provided is suitable for being use with the adequate technique.

That is, the laying-up step should be done either by 'Automated Tape Laying', ATL, or 'Automated Fibre Placement', AFP, technologies. Both ATL and AFP processes are functionally similar applying resin-impregnated fibre material (so called 'prepreg'), although each is used differently to achieve specific structure construction goals to provide strength or stiffness where needed. Particularly, the use of one or the other mainly depends on the geometry complexity of the part to manufacture, in which AFP allows higher curvatures. Nevertheless, dry fabric can also be used with RTM resin injections process although the resulting structural behaviour is not so good (because of the dry fabric) in comparison with ATL or AFP. Additional examples of suitable processes to be used within dry fabric are LRI or VPI.

In this sense, the lay-up sequence and fiber orientation is to be defined based on a coordinate system. In this sense, rosettes are coordinate systems that define the 0° direction for the plies laid-up. To do so, two options may be use:
- global rosette strategy, also known as 'straight lay-up', in which plies are laid-up based on a general coordinate system in which the 0° direction corresponds to a direction substantially parallel to the longest dimension of the preform, disregarding possible curvatures or deviations; or
- local rosette strategy, also known as 'steering lay-up', in which a local coordinate system sets the 0° direction differently at each point of the preform, taking into account its inherent curvature.

Throughout this entire document, a 'ply' should be understood as a single continuous area of composite material to be laid on a form, where two plies in the same layer do not normally overlap. The laying-up of plies forms a stuck which is known as a whole 'preform'.

On the other hand, the form-up step (the so-called 'pre-forming') may be done by two different technologies, hot forming or press-forming. Briefly, hot-forming uses a membrane and heat, whilst the press-forming uses a press and force.

Therefore, multiple combinations of manufacturing processes (i.e. related to tool options) can be used within the present invention. In short, it can be used tools formed by the following non-exhaustive list of combinations:
1. ATL with global rosette and hot forming; or
2. AFP with local rosette and hot forming; or
3. Dry fabric with RTM resin injection process.

A person skilled in the art should recognize that, in case the tool option 3 is to be used, laying-up and forming-up steps are brought together, since the curing mold is usually responsible for giving the final shape. Therefore, tool options 1 and 2 are of special interest within the present invention.

Also, it is common knowledge for a person skilled in the art to select the correct curing tool depending on at least the composite nature, this is, 'prepreg' or dry fiber.

It is to be noted that in conventional manufacturing processes, the mouseholes could be normally introduced at a separate step by any finishing operation (e.g. numerical cutting process), thus increasing the number of stages which impacts in the manufacturing lead-time, closely associated to costs increasing.

On the contrary, the present invention provides a manufacturing method in which a discontinuity is introduced within the laying-up step but internally, not becoming a through window like in the case of conventional mousehole. Accordingly, wrinkles can be avoided whilst load transferring can be still guaranteed since the outset surface (the one forming the outset surface of the outer cap) provides a continuous surface to be joined to the skin.

In this sense, a 'discontinuity' shall be understood throughout this entire document as a lack of structural continuity of the ply; that is, such as a cut, a notch, a slit, an indentation, or the like.

The number, dimensions, shape and arrangement of those discontinuities within a concrete ply (or even considering the whole laminate preform) may vary depending on the particular dimensions and structural requirements of the curved composite part to be manufactured.

Therefore, the discontinuity according to the invention is provided before the pre-forming process so that the flanges of the preform are formed-up without wrinkles due to the space released by them.

In an embodiment, the plies provided with at least one discontinuity are at least those oriented in the direction of the folding line local tangent.

That is, since the folding line is substantially parallel to the neutral axis of the curved composite part, this folding line should correspond to a direction substantially parallel to the longest dimension of the preform, which is defined by the coordinate system as the 0° direction, irrespective whether the coordinate system used is global or local. Thus, the plies provided with at least one discontinuity within this embodiment are those substantially oriented in 0° direction during the laying-up step.

Plies oriented in the direction of the folding line local tangent (i.e. substantially 0° direction) are the ones more prone to create wrinkles, because the fibers of these composite plies are not angled to absorb the compression loads created during pre-forming step.

Then, all the plies of the first preform remain unaltered (without discontinuities) except the ones with the oriented in the direction of the folding line local tangent. It is allowed an easier manufacturing method, drastically reducing the number of operations to be performed.

In a preferred embodiment, AFP technology is used for the laying-up step in order to provide the discontinuity (e.g. cut in the corresponding tows which form the ply) only in these tows (of the ply) affected while the laminate is being laminated instead of performing the cut afterwards in the final numerical cutting process as the conventional solutions does (when the cut was performed in the whole thickness of the laminate).

In an embodiment, at least one discontinuity is straight and extends entirely from the free end to the folding line. In other words, the at least one discontinuity initiated from the free end may be extended up to the beginning of the bending radius or up to the web area through such bending radius.

As it was already mentioned, the curved composite part may be longerons (or beams) or frames which normally arranged orthogonally between them; therefore these straight discontinuities substantially follows the arrangement orientation of one of these composite parts over the other.

Advantageously, it is allowed that plies provided with such at least one discontinuity in the preform slip over other plies during the pre-forming step.

In an embodiment, said at least one straight discontinuity further extends through the curved web of the preform towards the opposite free end, each discontinuity thus splitting such ply into two separate sections. Advantageously, this embodiment provides the easiest solution from the manufacturing point of view.

In an embodiment, at least two plies are provided with at least one discontinuity, at least two discontinuities being arranged staggered and separated both horizontally and in height. Preferably, this at least two discontinuities are homogeneously separated both horizontally and in height.

Discontinuities within this embodiment may form internal voids depending on the number of adjacent discontinuities; but never appearing on the face intended to be joined to the skin, leaving in that case a continuous surface.

Advantageously, this embodiment allows not having all the discontinuities of the preform laminate in a specific orientation at the same coordinate (correspondent to angular positions within the curved composite part). The particular staggered arrangement of the discontinuities is defined according to stress analysis and design requirements, with which a person skilled in the art is normally familiarized.

In an embodiment, at least one discontinuity provided on at least one ply is produced by 'cut and overlap' technique in the laying-up step.

The 'cut and overlap' technique should be understood as a laying-up of a particular ply where the start of a laid tow is overlapped by the end (having being cut) of the same or another tow. Advantageously, the discontinuities are provided within the normal laying-up process without the need of auxiliary cuttings on each ply.

A person skilled in the art shall recognize that this embodiment is of special relevance used in AFP technologies, due to the expeditious of the whole manufacturing lead-time.

In an embodiment, at least one discontinuity provided on at least one ply is produced by 'butt-joint' technique in the laying-up step, both ends of such at least one discontinuity being left without direct overlapping.

In this manner, unlike 'cut and overlap' technique, there will be no over-thickness since no overlapping is envisaged. A stress analysis of the area will allow identifying suitable points to allocate the discontinuities.

In an embodiment, the method further comprises:
- laying up a second flat preform composed by a set of stacked plies, such second preform being meant for forming part of the at least one outer cap of the curved composite part;
- bending in a form-up step this second flat preform up to acquire an adequate curvature so as to adapt the flange of the first formed-up preform;
- positioning such second formed-up preform over a face of said flange opposite the web; and
- curing at least both formed-up preforms together;
in such a way that this second preform once cured provides the continuous surface to be joined to the skin.

In an embodiment, all the plies of the first preform are provided with the same at least one discontinuity at same coordinates (correspondent to angular positions within the curved composite part) of the flange zone, the corresponding discontinuities providing a through discontinuity across the first preform.

Since the second preform is to provide the continuous surface to be joined to a skin upon curing, the first preform may contain such discontinuities through all its thickness. In this sense, discontinuities may be understood as 'fake mouseholes' in the sense that no stringers can pass through the curved composite part due to the presence of such cured second preform.

In an embodiment, at least one discontinuity comprises the shape of either:
- a cut, or
- a cut-out such as a mousehole type or a thin space free of composite material.

In an embodiment, the method further comprises:
- laying up a third flat preform similarly to such first flat preform composed by a set of stacked plies, such third flat preform being the mirror image of such first flat preform;
- bending in a form-up step this third flat preform by its folding line;
- positioning such first and third formed-up preform resting both curved webs on each other making contact symmetrically with respective bended flanges pointing outwards, and providing a composite roving adapted to fill the space between both bending radius; and
- curing at least both formed-up preforms together.

This embodiment allows manufacturing a 'T-shaped', 'L-shaped', 'C-shaped', or 'J-shaped' curved composite part.

It is understood by laying-up the third flat preform 'similiarly' to such first flat preform that the method further comprises:
- laying up a third flat preform composed by a set of plies stacked, such third flat preform comprising at least one folding line substantially parallel to the neutral axis of the curved composite part, an outer folding line dividing the third flat preform into:
   ∘ a curved web for being part of the curved web of the curved composite part, and
   ∘ a flange for being part of the outer cap of the curved composite part;
   in such a way that at least one ply is provided with at least one discontinuity within the flange zone, such at least one discontinuity being substantially perpendicular to the folding line and being initiated from the free end.

Both curved webs of the first and third preforms when positioned together acts a symmetric axis of the curved composite part.

It is to be noted that, by this embodiment, the curved web of said curved composite part may withstand higher loads as its strength is highly increased. In addition, the outer cap of the curved composite part provides a higher continuous surface to be joined to a skin, thus increasing stability and load transfer capacity.

In an embodiment, the curved composite part further comprises:
an inner cap close to such inner edge end of the curved web;
wherein the method further comprises:
- laying up the first flat preform, such preform further comprising an auxiliary folding line substantially parallel to the neutral axis of the curved composite part, this auxiliary folding line dividing the first flat preform into:
   ∘ the already present curved web, and
   ∘ an arrange opposite to the already present flange, said auxiliary flange for being part of the inner cap of the curved composite part;
- laying up a fourth flat preform composed by a set of plies stacked, such fourth preform being meant for forming part of the inner cap of the curved composite part;
- bending in a form-up step:
   ∘ the first flat preform by both the folding line and the auxiliary folding line; and
   ∘ this fourth flat preform up to acquire an adequate curvature so as to adapt the auxiliary flange of said first formed-up preform; and
- positioning such fourth formed-up preform over a face of said auxiliary flange opposite the web of said first formed-up preform; and
- curing at least both formed-up preforms together, in such a way that preferably an 'H-shaped' or 'I-shaped' curved composite part is manufactured.

It will be noticed that the folding line for the flange (related to the outer cap) is longer than the auxiliary folding line for the auxiliary flange (related to the inner cap).

In a second inventive aspect, the invention provides a curved composite part obtainable by the method according to any of the embodiments of the first inventive aspect.

The method according to the invention imparts technical properties to the curved composite part manufactured since at least one ply has at least one discontinuity within the flange zone (the portion of the curved composite part forming part of the outer cap), and the design constraint that such outer cap - close to the outer edge end of the curved web intended to join the skin - has a continuous surface and no *mouseholes* is met.

In a third inventive aspect, the invention provides an aircraft comprising a curved composite part according to any of the embodiments of the second inventive aspect.

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Figures 1a-1b: These figures show the per-forming of a curved flat laminate stressing the wrinkling effect which takes places on the compression zone of the plies.
- Figures 2a-2b: These figures show an 'H-shaped beam', and manufacturing method thereof.
- Figures 3a-3b: These figures show an example of a first flat preform with through discontinuities across its entire thickness, and the corresponding first formed-up preform, respectively.
- Figure 4: This figure shows the outer cap of the curved composite part with different bolts to join it to a skin.
- Figures 5: This figure shows an example of a first flat preform with discontinuities only in those plies oriented in the direction of the folding line local tangent.
- Figure 6: This figure shows a cross-sectional view of an example of a first preform which comprises discontinuities being arranged both one over the other at different heights, and staggered.
- Figures 7a-7b: These figures show an example of a first flat preform with straight discontinuities extending from the free end up to the folding line; and the corresponding first formed-up preform, respectively.
- Figure 8a-8b: These figures shows a cross-sectional view of an example of a first preform which comprises discontinuities produced by 'cut and overlap' and 'butt-joint' techniques, respectively.
- Figures 9a-9b: These figures show an example of a first flat preform with straight discontinuities which extends further through the curved web of the preform towards the opposite free end; and the corresponding first formed-up preform, respectively.
- Figure 10: This figure shows a schematic 'belly fairing' substructure comprising a curved composite part according to the present invention.
- Figure 11: This figure shows an aircraft comprising a curved composite part according to the present invention.

### DETAILED DESCRIPTION OF THE INVENTION

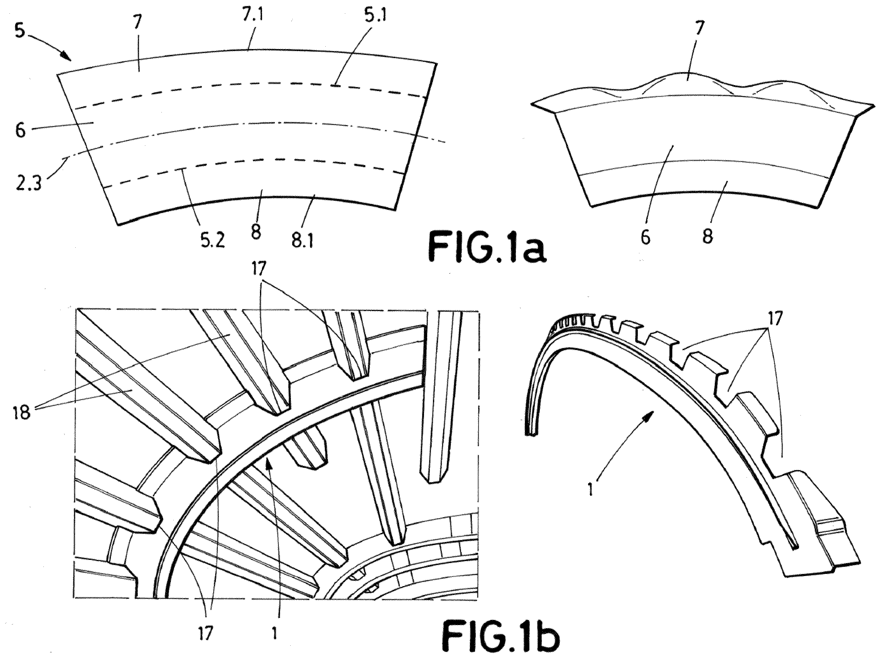

Figures 1a depicts the pre-forming process of a curved preform laid-up in a flat manner (*so-called* laminate). In particular, it will be described the wrinkling effect which takes places on the compression zone of the plies.

According to this figure, it has been laid-up a flat preform (5) by a set of plies stacked, such preform comprising two folding lines (5.1, 5.2) substantially parallel to the neutral axis (2.3) of the curved composite part (1) to be manufactured. Accordingly, the flat preform (5) comprises outer (5.1) and inner (5.2) folding lines which divide the first flat preform (5) into an inner flange (8), a web (6), and an outer flange (7).

Therefore, it is a typical preform for manufacturing aeronautical composite parts such as beams (or frames), the cross-sectional shape of which are normally 'C-shaped' or 'H-shaped'.

Assuming that the neutral axis (2.3) was straight, both folding lines (5.1, 5.2) had the same length and were also substantially straight. Then, when pre-forming a 'C-shape' (for instance) starting from a flat laminate, there is no difference in the plies length between the flat development and the formed-up one.

On the contrary, in case the composite part (1) had a neutral axis (2.3) with certain curvature (i.e. of any geometry but straight), when pre-forming from a flat laminate to a 'C-shaped' one for instance, it is needed an elongation or contraction of the flange area to adapt such curvature.

If this curvature of the neutral axis is small, the fibres of the plies may adapts to the new curved geometry without producing appreciable wrinkles (or negligible ones), but if the curvature is high, it is likely that wrinkles appear to adapt to the new geometry.

As it was already mentioned, in the pre-forming process of the flat laminate into a complex geometry the outer flange (7) area tend to get compressed and the inner flange (8) area of the ply tend to be strengthen. The wrinkling effect takes places on the zones where the plies tend to be compressed as can be seen in figure 1a -outer cap-.

Figure 1b depicts an extended solution of incorporating mouseholes (17) in the cross-section with the stringers (18). As it was already discussed in the state of the art, stringers (18) are primarily responsible for transferring the aerodynamic loads acting on the skin (19) onto the substructure beneath. Since they run along the skin (19) attached to it, any component of the substructure intended to bear such skin (e.g. frames, ribs or spars) may allow such stringers (18) to pass through it by the designated mouseholes (17) they incorporate in order not to collide. This conventional configuration is clearly shown in this figure.

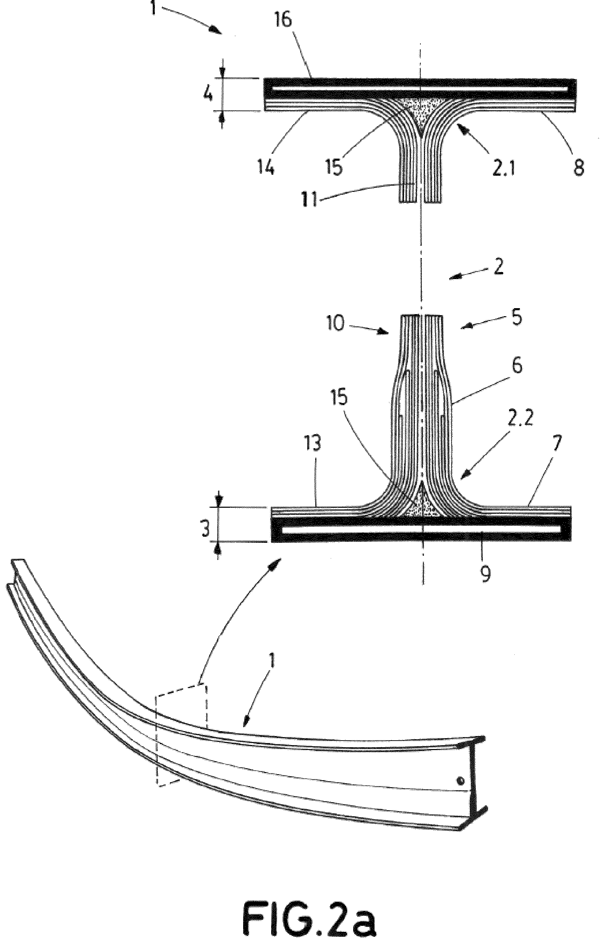

Figure 2a depicts a cross-sectional view of a curved composite part (1) shown aside, in particular with an 'H-shaped beam'. As it can be derived from this figure, this curved composite part (1) comprises:
- A curved web (2) with an inner edge (2.1) and an outer edge (2.2). Because of its curvature, this outer edge (2.2) should be longer than the inner edge (2.1).
- An outer cap (3) (also known as foot closing cap) close to such outer edge (2.2) end of the curved web (2) which is intended to provide the contacting surface with a skin (19). For meeting the structural requirements, the outer cap (3) is to provide a continuous surface (3.1) to be joined to a skin (19) by any means, such as bolts, rivets, or any other removable attachments means.
- An inner cap (4) (also known as head closing cap) close to such inner edge (2.1) end of the curved web (2), intended to remain inside the aircraft.

A person skilled in structures is familiar with the concept of the neutral axis (2.3), being the line in in the curved composite part (1) subjected to a bending action (that is, once positioned in its intended place of the aircraft and sustaining loads without deformation) in which the fibers are neither stretched nor compressed. Because of the curved arrangement of the composite part meant to fit aero-shape of the skin (19), its neutral axis (curved) is to be of any geometry but straight.

Other reference lines which can be used are the axis set up by each centre of gravity of the multiple sections that make a piece, or even their centroids.

It has been pointed out different preforms from which such curved composite part (1) with a 'H-shaped' cross-section is manufactured. They are:
- Two 'C-shaped' formed-up preforms (5, 10) identified with the first (5) and third (10) preforms, each being the mirror image of the other and positioned in such a way that both rest on each other making their respective webs (6, 11) contact symmetrically. As it can be seen, the contacting area between webs (6, 11) of the first (5) and third (10) preforms acts as a symmetrical plane of the 'H-shaped' cross-section. Each of these 'C-shaped' formed-up preforms comprises a curved web (6, 11) and two flanges (7, 8; 13, 14) at their respective ends.
- Two rovings (15) adapted to fill the space between both bending radius (i.e. on respective 'C-shaped' corners). A 'roving' is normally understood as a bundle of fibres which may be unidirectional and unspun or otherwise shaped into patterns to provide structural continuity and void avoidance.
- An outer formed-up preform identified with a second preform (9), this second preform (9) forming part of the outer cap (3) of the curved composite part (1). It is to be noticed that this outer cap (3) is composed of/by the conjunction with flanges (7, 13) of each first and third preforms at which they are cocured. Upon cocured, both preforms become a single composite part.
- An inner formed-up preform identified with a fourth preform (16), this fourth preform (16) forming part of the inner cap (4) of the curved composite part (1). It is to be noticed that this inner cap (4) is composed in conjunction with auxiliary flanges (8, 14) of each first (5) and third (10) preforms at which they are bonded. Upon cocured, both preforms become a single composite part.

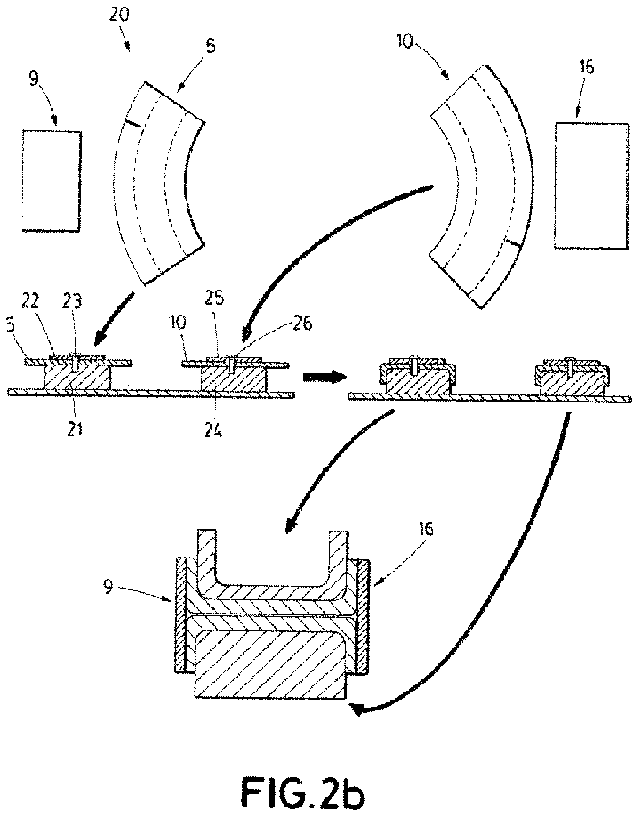

Figure 2b schematically depicts particular steps for manufacturing the curved composite part (1) of figure 2a.

Firstly, several composite plies are laid-up one upon the other in a flat manner, thus resulting in a stack of plies. In turn, this stack of plies shall form part of the final curved composite part. In particular, first (5), second (9), third (10) and fourth (16) preforms are laid-up within their respective shape.

According to the invention, first (5) and third (10) preforms are laid-up with a substantially ring-shape portionwhose longitudinal axis is substantially curved adapted to the expected aero-shape of the skin (19). These preforms (5, 10) are divided into a web (6, 11) and two flanges (7, 8; 13, 14) at which at least one ply is provided with at least one discontinuity (12).

On the other hand, second (9) and fourth (16) preforms are laid-up with a substantially rectangular shape with a sufficient width so as to allow effective load transferring. In particular, the width of each of these preforms (9, 16) should correspond to the double of the flange width of the first (7, 8) and third (13, 14) preform intended to be bonded with. Also, rowing surface must be accounted to tune-up width of second (9) and fourth (16) preforms.

It is to be noted that all preforms upon laid-up are flat uncured laminates. In addition, any laying-up techniques may be used as the invention defines. Usually, plies are laid-up oriented in a sequence of 0°, 90°, +45°, and -45°; this orientation sequence can be repeated as necessary according to structural requisites of the final curved composite part (1).

Secondly, those preforms already laid-up are supported in a mould of the tool (20) to form them up to their final shape before curing. Any forming-up technology (e.g. hot forming and press-forming) may be used; nevertheless, hot forming technology is preferred.

In particular, first (5) and third (10) preforms rest on respective upper (21) and lower (24) modules and are retained by respective caul plates (22, 25) on top.

Further, a positioner (23, 26) is placed to ease and permit a correct pre-forming step. These performs are bended in a form-up step by their folding lines, achieving respective cross-sectional 'C-shaped' preforms as a result.

The second (9) and fourth (16) preforms are simply adapted to the expected aero-shape of the skin; that is, they remain substantially rectangular flat but curved according to the curvature of the skin (19).

Finally, in short, all the preforms are positioned and put together in the tool (20) (including the rowing between the bending radius of first and third preforms) for the final curing. To cure the uncured laminates, the preforms are subjected to a final curing cycle.

Briefly, the invention defines a method for manufacturing a curved composite part (1), wherein the curved composite part (1) to be manufactured at least comprises:
a curved web (2) with an inner edge (2.1) and an outer edge (2.2) and a neutral axis (2.3) therebetween, wherein said outer edge (2.2) is longer than said inner edge (2.1), and
an outer cap (3) close to such outer edge (2.2) end of the curved web (2), and adapted to provide a continuous surface (3.1) to be joined to a skin.

The method comprises the following steps:
- providing a tool adapted to support at least one preform, and to form them up to their final shape before curing;
- laying up a first flat preform (5) composed by a set of stacked plies, such preform (5) comprising at least one folding line (5.1) substantially parallel to the neutral axis (2.3) of the curved composite part (1), the folding line (5.1) dividing the first flat preform into:
   ∘ a curved web (6) for being part of the curved web (2) of the curved composite part (1), and
   ∘ a flange (7) for being part of the outer cap (3) of the curved composite part (1), such flange (7) being delimited by the folding line (5.1) and a free end (7.1);
   in such a way that at least one ply is provided with at least one discontinuity (12) within the flange (7) zone, such at least one discontinuity (12) being substantially perpendicular to the folding line (5.1) and being initiated from the free end (7.1);
- bending in a form-up step the first flat preform (5) by the folding line (5.1); and
- curing the at least one formed-up preform (5).

For exemplary purposes, different manufacturing solutions according to the present invention are described.

### Example 1 - Through discontinuity' (12) across the first preform (5).

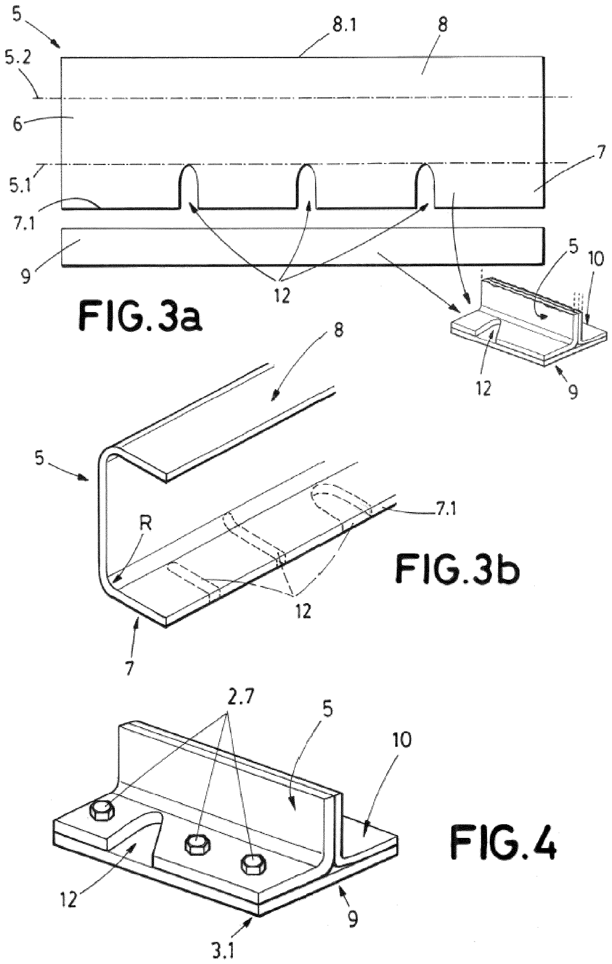

Figure 3a depicts a first flat preform (5) (or third flat preform (10)) composed by a set of stacked plies. As it can be observed, all the plies of this first preform comprise the same discontinuities (12) at same coordinates (that is, ones over the others) of the flange zone; and, as a result, there is through discontinuities (12) across the first preform (5) formed by such corresponding discontinuities.

In this first (5) (or third) preform, a 'window' or 'fake mousehole' is introduced before the pre-forming process so that the flange (7) of the preform is formed-up without wrinkles due to the space released by the mentioned discontinuities.

To meet the structural requirements of load transferring, the second flat preform (9) composed by a set of plies stacked is to be laid-up without discontinuities in such a way that, once cured, it provides the continuous surface (3.1) to be joined to the skin. (19) Therefore, the outer cap (3) of the curved composite part (1) (formed in part by this second preform) is responsible for the continuous surface to assure effective load transferring.

An schematic view of the final arrangement of these first (5) and second (10) preforms is also shown for illustrative purposes.

Particularly, different discontinuity (12) shapes may be performed during the laying-up step. Figure 3b depicts the corresponding first (5) formed-up preform comprising different discontinuity shapes.

Mousehole or oblong types are preferred shapes, which may be extended up to the beginning of the bending radius (R) or up to the web area (6) through such bending radius (R) as shown in this figure.

Although different types of discontinuities can be provided, a person skilled in the art recognizes that the particular number, position, and arrangement of these discontinuities are based on a stress analysis to meet the structural requirements of the curved composite part (1) in the most suitable way.

In addition, since this solution is of special interest in the belly fairing (30) substructure, some of these curved composite parts (1) need to be bolted to the skin (19). Figure 4 depicts the outer cap of the curved composite part with different bolts (27) to join it to a skin (19).

Advantageously, by this solution there is an extra thickness for bolting or riveting purposes due to the presence of that second laminate (outer cap).

### Example 2 - Discontinuities (12) in plies oriented in the direction of the folding line (5.1) local tangent.

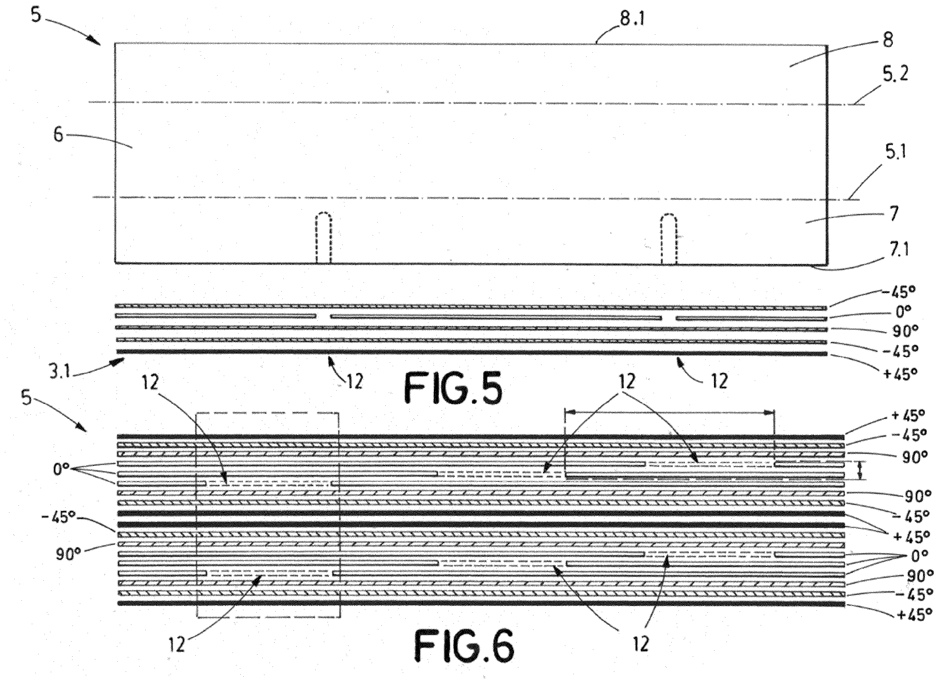

Figure 5 depicts another example of a first flat preform (5) (or third flat preform) with discontinuities (12) only in those plies oriented in the direction of the folding line (5.1) local tangent. As it can be observed, since only some plies are provided with such discontinuities, they are drawn in dashed lines representing that they are left hidden inside the first preform (5). Accordingly, the flange (7) of the ply which will act as the outer cap surface (3.1) remains continuous.

Thus, there is no need in this particular example of providing a second preform (9).

Since discontinuities (12) are introduced within the laying-up step, only those plies oriented in the direction of the folding line (5.1) local tangent (i.e. 0° direction) comprises these discontinuities.

To speed-up these laying-up step, advantageously, Automated Fiber Placement may be used to cut only these plies affected while the laminate is being laminated instead that performing it in the final numerical cutting process.

This figure shows a preferred embodiment where all those plies oriented in other directions except 0° remain continuous, that is, oriented in 90°, +45°, and - 45°.

Nevertheless, the present invention allows combination of different examples; in other words, particular discontinuities (12) can be introduced according with different solutions since the 'curved composite part' may be understood as the entire part or a portion thereof.

For illustrative purposes, this figure 5 shows the discontinuities (12) initiated from the free (7.1) end and substantially perpendicular to the folding line (5.1) but not reaching the folding line *per se.* Nevertheless, longer discontinuities (up to the web area, for instance) or with different shapes can be also considered.

Figure 6 depicts a cross-sectional view of an example of the first preform (5) (or third preform) comprising discontinuities (12) being arranged both one over the other (pointed out within the dashed-line rectangle), and staggered. In case of discontinuities arranged one over the other, it is preferred to leave at least four plies therebetween in order to ensure well structural behaviour.

For illustrative purposes, the discontinuities (12) have been shown homogeneously separated both horizontally and in height. Nevertheless, other arrangements can be considered depending on stress analysis and design requirements.

When many plies are laid-up to build the preform, it is desirable to ensure that plies with the same orientation (also known as ply angle) do not have their discontinuities exactly aligned (one over the other). This staggered configuration preferably offsets the discontinuities perpendicular to the ply orientation in order not to jeopardize structural requirements.

### Example 3 - 'Straight discontinuities'.

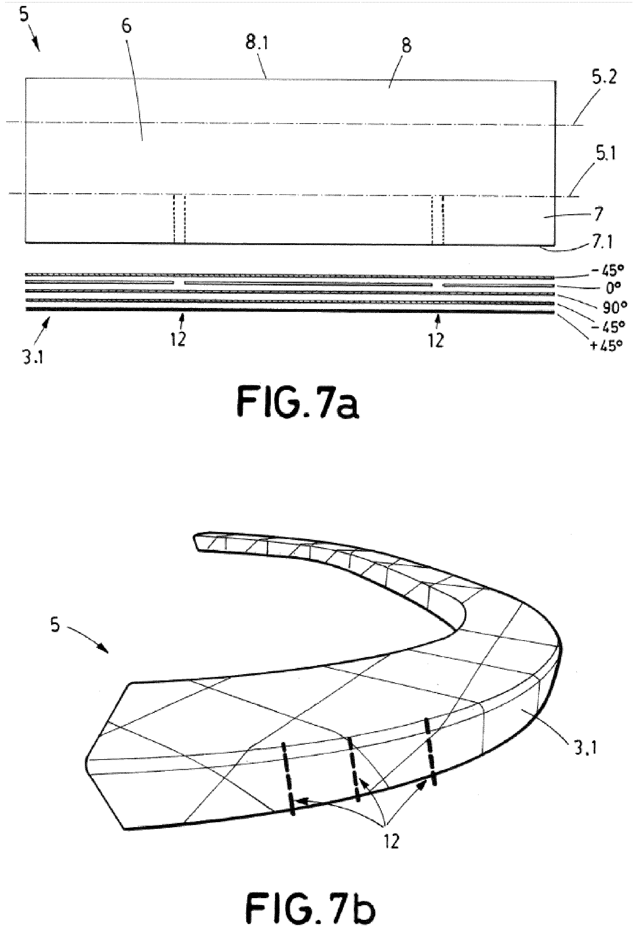

Figure 7a depicts another example of a first flat preform (5) (or third flat preform) with straight discontinuities (12) extending, preferably, from the free end (7.1) up to the folding line (5.1).

Similarly to former solutions, discontinuities (12) are drawn in dashed-line representing that they are left hidden inside the preform (5) upon laying-up step.

This example is very easy to implement in any automatic laying-up technology (such as ATL or AFP), since the discontinuities (12) are introduced simply stopping and continuing the laying-up of the ply but without any further orientation tuning.

Figure 7b depicts the corresponding first formed-up preform (5) (or third formed-up preform, if applies).

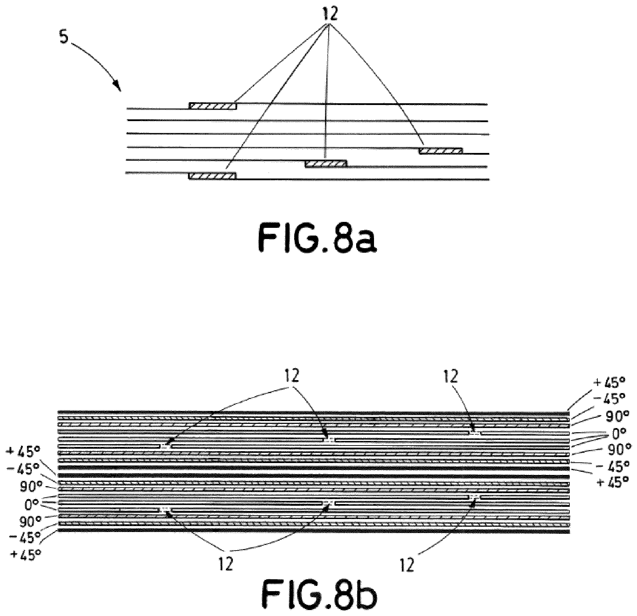

This example allows different laying-up techniques. For instance, figure 8a depicts a cross-sectional view of an example of a preform (either first or third) which comprises discontinuities produced by 'cut and overlap' technique.

From this figure, it is observed that the laid-up of a single ply comprises a start- and-stop process, which may be normally performed by any technology such as AFP or ATL. Therefore, if a ply is being laid and suddenly stops in order to incorporate the proper 'discontinuity', two options are possible:
- to continue (start) the laying-up of the ply at the same coordinate (or moved slightly forward); and thus, a butt-joint (see figure 8b) is produced; or
- moved backwards and continue in order to start again laying-up the ply *over* the former end produced by the stop; thus, this new starting overlaps this former end producing a 'cut and overlap' scenario.

Depending on the laying-up technology (e.g. AFP or ATL), the width of the composite tow may vary, but the philosophy remains the same.

An example of 'butt-joint' technique is shown in figure 8b, which depicts a cross-sectional view of another example of a preform (either first or third) which comprises discontinuities produced by this technique.

This alternative where plies are not overlapped advantageously provides no over-thickness, which assist to assure a continuous surface (3.1) of the outer cap (3) avoiding any local abutment which may put into risk the adequate load transferring.

### Example 4 - Straight discontinuities (12) extending further towards the opposite free end (8.1).

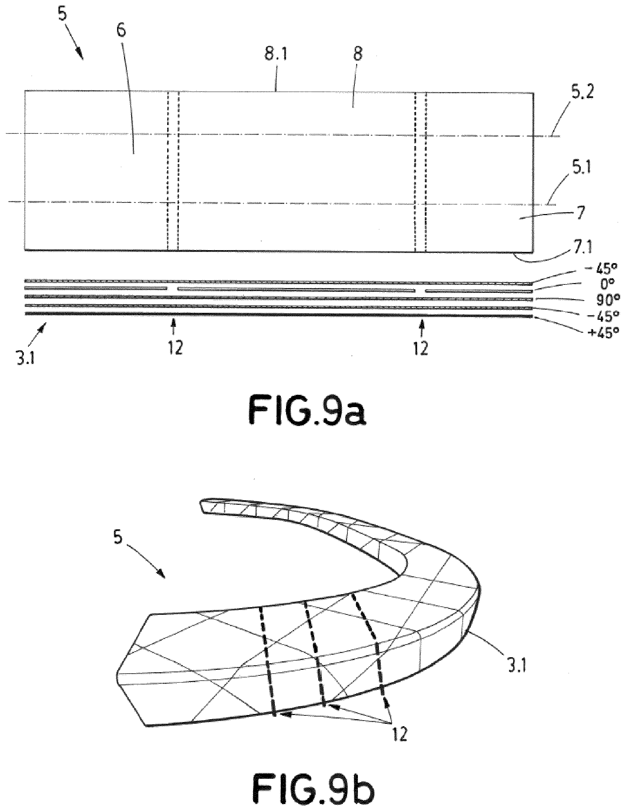

Figure 9a depicts an example of a first flat preform (5) with straight discontinuities (12) which extends further through the curved web (6) of the preform (5) towards the opposite free end (8.1).

Likewise than example 3, there are straight discontinuities (12) extending from the free end (7.1) of the flange (7) to the folding line (5.1). Nevertheless, these discontinuities (12) do not stop at the folding line (5.1), instead, they continue all along the complete section (6, 8).

As a result, each discontinuity (12) splits the ply into two separate sections. In case more than one of these discontinuities (12) is envisaged within the same ply, this will be split it in a corresponding number of sections.

Accordingly, figure 9b depicts the corresponding first formed-up preform (5) (or third formed-up preform) by the former example. Discontinuities (12) are shown in dashed-lines to represent that are left hidden in order to ensure the continuous surface (3.1).

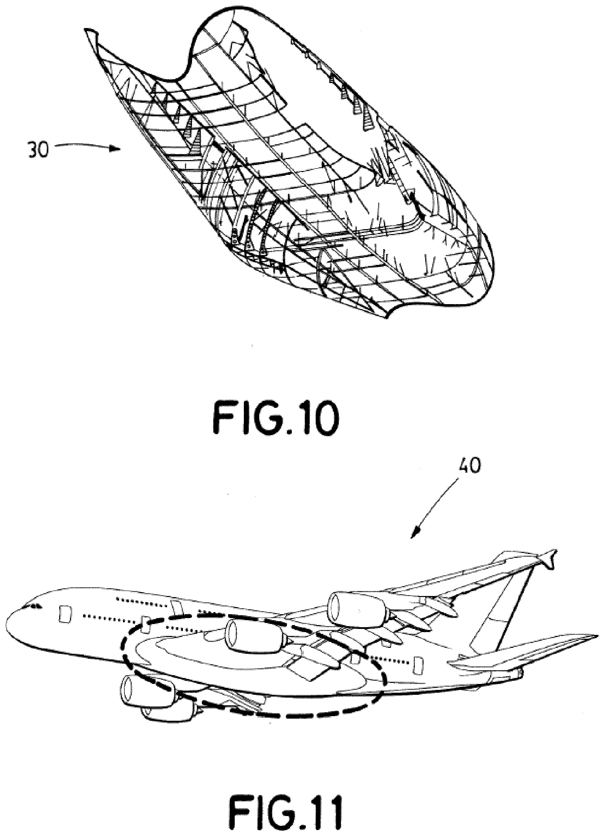

Figure 10 shows a schematic substructure (30) of a 'belly fairing'. As it was briefly discussed in the background of the invention, frames, beams or other composite parts may be used. Any of them may be the curved composite part (1) according to the present invention provided that a notable curvature is present.

Figure 11 shows an aircraft (40) comprising a curved composite part (1) according to the present invention.

## Claims

1. Method for manufacturing a curved composite part (1), said curved composite part (1) at least comprising:
a curved web (2) with an inner edge (2.1) and an outer edge (2.2) and a neutral axis (2.3) therebetween, wherein said outer edge (2.2) is longer than said inner edge (2.1), and
an outer cap (3) close to such outer edge (2.2) end of the curved web (2), and adapted to provide a continuous surface (3.1) to be joined to a skin;
wherein the method comprises the steps of:
- providing a tool adapted to support at least one preform, and to form them up to their final shape before curing;
- laying up a first flat preform (5) composed by a set of stacked plies, such preform (5) comprising at least one folding line (5.1) substantially parallel to the neutral axis (2.3) of the curved composite part (1), the folding line (5.1) dividing the first flat preform into:
∘ a curved web (6) for being part of the curved web (2) of the curved composite part (1), and
∘ a flange (7) for being part of the outer cap (3) of the curved composite part (1), such flange (7) being delimited by the folding line (5.1) and a free end (7.1);
in such a way that at least one ply is provided with at least one discontinuity (12) within the flange (7) zone, such at least one discontinuity (12) being substantially perpendicular to the folding line (5.1) and being initiated from the free end (7.1);
- bending in a form-up step the first flat preform (5) by the folding line (5.1); and
- curing the at least one formed-up preform (5), the curved composite part (1) being manufactured;
**characterized in that** the plies provided with at least one discontinuity (12) are only those oriented in the direction of the folding line (5.1) local tangent.

2. Method for manufacturing a curved composite part (1) according to claim 1, wherein at least one discontinuity (12) is straight and extends entirely from the free end (7.1) to the folding line (5.1).

3. Method for manufacturing a curved composite part (1) according to claim 2, wherein said at least one straight discontinuity (12) further extends through the curved web (6) of the preform (5) towards the opposite free end, said discontinuity (12) thus splitting such ply into two separate sections.

4. Method for manufacturing a curved composite part (1) according to any of claims 1 to 3, wherein at least two plies are provided with at least one discontinuity (12), at least two discontinuities (12) being arranged staggered and separated both horizontally and in height.

5. Method for manufacturing a curved composite part (1) according to any of claims 1 to 4, wherein at least one discontinuity (12) provided on at least one ply is produced by 'cut and overlap' technique in the laying-up step.

6. Method for manufacturing a curved composite part (1) according to any of claims 1 to 5, wherein at least one discontinuity (12) provided on at least one ply is produced by 'butt-joint' technique in the laying-up step, both ends of such at least one discontinuity (12) being left without direct overlapping.

7. Method for manufacturing a curved composite part (1) according to any of claims 1 to 6, wherein the method further comprises:
- laying up a second flat preform (9) composed by a set of stacked plies, such second preform (9) being meant for forming part of the at least one outer cap (3) of the curved composite part (1); ;
- bending in a form-up step this second flat preform (9) up to acquire an adequate curvature so as to adapt to the flange (7) of the first formed-up preform (5);
- positioning such second formed-up preform (9) over a face of said flange (7) opposite the web (6); and
- curing at least both formed-up preforms together;
in such a way that this second preform (9) once cured provides the continuous surface (3.1) to be joined to the skin.

8. Method for manufacturing a curved composite part (1) according to claim 7, wherein all the plies of the first preform (5) are provided with the same at least one discontinuity (12) at same coordinates of the flange (7) zone, the corresponding discontinuities (12) providing a through discontinuity across the first preform (5).

9. Method for manufacturing a curved composite part (1) according to any of claims 1 to 8, wherein at least one discontinuity (12) comprises the shape of either:
- a cut, or
- a cut-out such as a mousehole type or a thin space free of composite material.

10. Method for manufacturing a curved composite part (1) according to any of claims 1 to 9, wherein the method further comprises:
- laying up a third flat preform (10) similarly to such first flat preform (5) composed by a set of stacked plies, such third flat preform (10) being the mirror image of such first flat preform (5);
- bending in a form-up step this third flat preform (10) by its folding line (10.1);
- positioning such first (5) and third (10) formed-up preform resting both curved webs (6, 11) on each other making contact symmetrically with respective bended flanges (7, 13) pointing outwards, and providing a composite roving (15) adapted to fill the space between both bending radius; and
- curing at least both formed-up preforms together; in such a way that preferably a 'T-shaped', or 'L-shaped', or 'C-shaped', or 'J-shaped' or 'H-shaped' curved composite part (1) is manufactured.

11. Method for manufacturing a curved composite part according to any of claims 1 to 10, wherein the curved composite part (1) further comprises:
an inner cap (4) close to such inner edge (2.1) end of the curved web (2);
wherein the method further comprises:
- laying up the first flat preform (5), such preform (5) further comprising an auxiliary folding line (5.2) substantially parallel to the neutral axis (2.3) of the curved composite part (1), this auxiliary folding line (5.2) dividing the first flat preform (5) into:
∘ the already present curved web (6), and
∘ an auxiliary flange (8) arranged opposite to the already present flange (7), said auxiliary flange (8) for being part of the inner cap (4) of the curved composite part (1);
- laying up a fourth flat preform (16) composed by a set of stacked plies, such fourth preform (16) being meant for forming part of the inner cap (4) of the curved composite part (1);
- bending in a form-up step:
∘ the first flat preform (5) by both the folding line (5.1) and the auxiliary folding line (5.2); and
∘ this fourth flat preform (16) up to acquire an adequate curvature so as to adapt the auxiliary flange (8) of said first formed-up preform (5); and
- positioning such fourth formed-up preform (16) over a face of said auxiliary flange (8) opposite the web (6) of said first formed-up preform (5); and
- curing at least both formed-up preforms together, in such a way that preferably an 'H-shaped' or 'I-shaped' curved composite part (1) is manufactured.

12. A curved composite part (1) obtainable by the method according to any of claims 1 to 11.

13. Aircraft comprising a curved composite part (1) according to claim 12.

## Patentansprüche

1. Verfahren zum Herstellen eines gebogenen Verbundbauteils (1), wobei das gebogene Verbundbauteil (1) wenigstens umfasst:
einen gebogenen Steg (2) mit einer Innenkante (2.1) und einer Außenkante (2.2) und einer neutralen Achse (2.3) dazwischen, wobei die Außenkante (2.2) länger als die Innenkante (2.1) ist, und
eine Außenabdeckung (3) nahe dem Ende der Außenkante (2.2) des gebogenen Stegs (2) und die ausgelegt ist, eine mit einer Haut zu verbindende durchgehende Fläche (3.1) bereitzustellen;
wobei das Verfahren die folgenden Schritte umfasst:
- Bereitstellen eines Werkzeugs, das ausgelegt ist, wenigstens einen Vorformling zu halten und sie vor Aushärten bis zu ihrer endgültigen Form zu formen;
- Schichten eines aus einem Satz gestapelter Lagen bestehenden ersten flachen Vorformlings (5), wobei der Vorformling (5) wenigstens eine Falzlinie (5.1) umfasst, die im Wesentlichen parallel zu der neutralen Achse (2.3) des gebogenen Verbundbauteils (1) ist, wobei die Falzlinie (5.1) den ersten flachen Vorformling in Folgendes teilt:
∘ einen gebogenen Steg (6), der Teil des gebogenen Stegs (2) des gebogenen Verbundbauteils (1) ist, und
∘ einen Flansch (7), der Teil der Außenabdeckung (3) des gebogenen Verbundbauteils (1) ist, wobei der Flansch (7) durch die Falzlinie (5.1) und ein freies Ende (7.1) begrenzt ist;
auf derartige Weise, dass wenigstens eine Lage mit wenigstens einer Diskontinuität (12) in der Flansch(7)-Zone versehen ist, so dass wenigstens eine Diskontinuität (12) im Wesentlichen senkrecht zu der Falzlinie (5.1) ist und von dem freien Ende (7.1) ausgeht;
- Biegen, in einem Formgebungsschritt, des ersten flachen Vorformlings (5) um die Falzlinie (5.1); und
- Aushärten des wenigstens einen geformten Vorformlings (5), wobei das gebogene Verbundbauteil (1) hergestellt wird;
**dadurch gekennzeichnet, dass** die Lagen, die mit wenigstens einer Diskontinuität (12) versehen werden, nur diejenigen sind, die in der Richtung der örtlichen Tangente der Falzlinie (5.1) ausgerichtet sind.

2. Verfahren zum Herstellen eines gebogenen Verbundbauteils (1) nach Anspruch 1, wobei wenigstens eine Diskontinuität (12) gerade ist und sich vollständig von dem freien Ende (7.1) zu der Falzlinie (5.1) erstreckt.

3. Verfahren zum Herstellen eines gebogenen Verbundbauteils (1) nach Anspruch 2, wobei sich die wenigstens eine gerade Diskontinuität (12) weiter durch den gebogenen Steg (6) des Vorformlings (5) hin zu dem gegenüberliegenden freien Ende erstreckt, wobei die Diskontinuität (12) somit die Lage in zwei getrennte Bereiche teilt.

4. Verfahren zum Herstellen eines gebogenen Verbundbauteils (1) nach einem der Ansprüche 1 bis 3, wobei wenigstens zwei Lagen mit wenigstens einer Diskontinuität (12) versehen sind, wobei wenigstens zwei Diskontinuitäten (12) versetzt angeordnet und sowohl horizontal als auch in der Höhe getrennt sind.

5. Verfahren zum Herstellen eines gebogenen Verbundbauteils (1) nach einem der Ansprüche 1 bis 4, wobei wenigstens eine Diskontinuität (12) an wenigstens einer Lage in dem Schritt des Schichtens durch eine "Schneide- und Überlapp"-Technik hergestellt wird.

6. Verfahren zum Herstellen eines gebogenen Verbundbauteils (1) nach einem der Ansprüche 1 bis 5, wobei wenigstens eine Diskontinuität (12) an wenigstens einer Lage in dem Schritt des Schichtens durch eine "Stumpfverbindungs"-Technik hergestellt wird, wobei beide Enden der wenigstens einen Diskontinuität (12) ohne direktes Überlappen belassen werden.

7. Verfahren zum Herstellen eines gebogenen Verbundbauteils (1) nach einem der Ansprüche 1 bis 6, wobei das Verfahren ferner umfasst:
- Schichten eines aus einem Satz gestapelter Lagen bestehenden zweiten flachen Vorformlings (9), wobei der zweite Vorformling (9) zum Formen eines Teils der wenigstens einen Außenabdeckung (3) des gebogenen Verbundbauteils (1) bestimmt ist;
- Biegen, in einem Formgebungsschritt, des zweiten flachen Vorformlings (9) nach oben, um eine geeignete Biegung zum Anpassen an den Flansch (7) des ersten geformten Vorformlings (5) zu erhalten;
- Positionieren des zweiten geformten Vorformlings (9) über einer Fläche des Flansches (7) gegenüber des Stegs (6); und
- Aushärten wenigstens beider geformter Vorformlinge miteinander;
auf derartige Weise, dass der zweite Vorformling (9) nach Aushärten die mit der Haut zu verbindende durchgehende Fläche (3.1) bereitstellt.

8. Verfahren zum Herstellen eines gebogenen Verbundbauteils (1) nach Anspruch 7, wobei alle Lagen des ersten Vorformlings (5) mit der gleichen wenigstens einen Diskontinuität (12) an gleichen Koordinaten der Flansch(7)-Zone versehen werden, wobei die entsprechenden Diskontinuitäten (12) eine Durchgangsdiskontinuität über den ersten Vorformling (5) bereitstellen.

9. Verfahren zum Herstellen eines gebogenen Verbundbauteils (1) nach einem der Ansprüche 1 bis 8, wobei wenigstens eine Diskontinuität (12) die Form umfasst von entweder:
- einem Einschnitt, oder
- einem Ausschnitt wie beispielsweise einer Vorbohrlochart oder einen dünnen Raum frei von Verbundwerkstoff.

10. Verfahren zum Herstellen eines gebogenen Verbundbauteils (1) nach einem der Ansprüche 1 bis 9, wobei das Verfahren ferner umfasst:
- Schichten eines aus einem Satz gestapelter Lagen bestehenden dritten flachen Vorformlings (10) ähnlich zu dem ersten flachen Vorformling (5), wobei der dritte flache Vorformling (10) das Spiegelbild des ersten flachen Vorformlings (5) ist;
- Biegen, in einem Formgebungsschritt, des dritten flachen Vorformlings (10) um seine Falzlinie (10.1);
- Positionieren des ersten (5) und dritten (10) geformten Vorformlings, sodass beide gebogenen Stege (6, 11) aufeinander ruhen, sodass sie symmetrisch mit jeweiligen nach außen weisenden gebogenen Flanschen (7, 13) in Kontakt kommen, und Bereitstellen eines Verbundfaserstrangs (15), der ausgelegt ist, den Raum zwischen beiden Biegeradien zu füllen; und
- Aushärten wenigstens beider geformter Vorformlinge miteinander; auf derartige Weise, dass vorzugsweise ein "T-förmiges" oder "L-förmiges" oder "C-förmiges" oder "J-förmiges" oder "H-förmiges" gebogenes Verbundbauteil (1) hergestellt wird.

11. Verfahren zum Herstellen eines gebogenen Verbundbauteils nach einem der Ansprüche 1 bis 10, wobei das gebogene Verbundbauteil (1) ferner umfasst:
eine Innenabdeckung (4) nahe dem Ende der Innenkante (2.1) des gebogenen Stegs (2);
wobei das Verfahren ferner umfasst:
- Schichten des ersten flachen Vorformlings (5), wobei der Vorformling (5) ferner eine zusätzliche Falzlinie (5.2) umfasst, die im Wesentlichen parallel zu der neutralen Achse (2.3) des gebogenen Verbundbauteils (1) ist, wobei die zusätzliche Falzlinie (5.2) den ersten flachen Vorformling (5) in Folgendes teilt:
∘ den bereits vorhandenen gebogenen Steg (6), und
∘ einen zusätzlichen Flansch (8), der gegenüber dem bereits vorhandenen Flansch (7) angeordnet ist, wobei der zusätzliche Flansch (8) Teil der Innenabdeckung (4) des gebogenen Verbundbauteils (1) ist;
- Schichten eines aus einem Satz gestapelter Lagen bestehenden vierten flachen Vorformlings (16), wobei der vierte Vorformling (16) zum Formen eines Teils der Innenabdeckung (4) des gebogenen Verbundbauteils (1) bestimmt ist;
- Biegen, in einem Formgebungsschritt:
∘ des ersten flachen Vorformlings (5) um sowohl die Falzlinie (5.1) als auch die zusätzliche Falzlinie (5.2); und
∘ des vierten flachen Vorformlings (16) nach oben, um eine geeignete Biegung zum Anpassen des zusätzlichen Flansches (8) des ersten geformten Vorformlings (5) zu erhalten; und
- Positionieren des vierten geformten Vorformlings (16) über einer Fläche des zusätzlichen Flansches (8) gegenüber des Stegs (6) des ersten geformten Vorformlings (5); und
- Aushärten wenigstens beider geformter Vorformlinge miteinander, auf derartige Weise, dass vorzugsweise ein "H-förmiges" oder "I-förmiges" gebogenes Verbundbauteil (1) hergestellt wird.

12. Gebogenes Verbundbauteil (1), das durch das Verfahren nach einem der Ansprüche 1 bis 11 erhalten werden kann.

13. Flugzeug, umfassend ein gebogenes Verbundbauteil (1) nach Anspruch 12.

## Revendications

1. Procédé de fabrication d'une pièce composite incurvée (1), ladite pièce composite incurvée (1) comprenant au moins :
une bande incurvée (2) avec un bord interne (2.1) et un bord externe (2.2) et un axe neutre (2.3) entre eux, ledit bord externe (2.2) étant plus long que ledit bord interne (2.1), et
un chapeau externe (3) proche de l'extrémité dudit bord externe (2.2) de la bande incurvée (2), et adapté pour fournir une surface continue (3.1) devant être assemblée à un revêtement ;
le procédé comprenant les étapes suivantes :
- obtention d'un outil adapté pour supporter au moins une préforme, et pour les façonner jusqu'à leur forme finale avant durcissement ;
- accumulation d'une première préforme plate (5) composée d'un ensemble de couches empilées, ladite préforme (5) comprenant au moins une ligne de pli (5.1) sensiblement parallèle à l'axe neutre (2.3) de la pièce composite incurvée (1), la ligne de pli (5.1) divisant la première préforme plate en :
∘ une bande incurvée (6) destinée à faire partie de la bande incurvée (2) de la pièce composite incurvée (1), et
∘ un rebord (7) destiné à faire partie du chapeau externe (3) de la pièce composite incurvée (1), ledit rebord (7) étant délimité par la ligne de pli (5.1) et une extrémité libre (7.1) ;
de telle sorte qu'au moins une couche est pourvue d'au moins une discontinuité (12) à l'intérieur de la zone du rebord (7), ladite au moins une discontinuité (12) étant sensiblement perpendiculaire à la ligne de pli (5.1) et étant initiée depuis l'extrémité libre (7.1) ;
- pliage dans une étape de façonnage de la première préforme plate (5) par la ligne de pli (5.1) ; et
- durcissement de l'au moins une préforme façonnée (5), la pièce composite incurvée (1) étant fabriquée ; **caractérisé en ce que** les couches pourvues d'au moins une discontinuité (12) sont uniquement celles orientées dans la direction de la tangente locale à la ligne de pli (5.1).

2. Procédé de fabrication d'une pièce composite incurvée (1) selon la revendication 1, dans lequel au moins une discontinuité (12) est rectiligne et s'étend entièrement depuis l'extrémité libre (7.1) jusqu'à la ligne de pli (5.1) .

3. Procédé de fabrication d'une pièce composite incurvée (1) selon la revendication 2, dans lequel ladite au moins une discontinuité rectiligne (12) s'étend en outre à travers la bande incurvée (6) de la préforme (5) vers l'extrémité libre opposée, ladite discontinuité (12) divisant ainsi ladite couche en deux sections séparées.

4. Procédé de fabrication d'une pièce composite incurvée (1) selon l'une quelconque des revendications 1 à 3, dans lequel au moins deux couches sont pourvues d'au moins une discontinuité (12), au moins deux discontinuités (12) étant disposées en quinconce et séparées à la fois horizontalement et en hauteur.

5. Procédé de fabrication d'une pièce composite incurvée (1) selon l'une quelconque des revendications 1 à 4, dans lequel au moins une discontinuité (12) pratiquée sur au moins une couche est produite par une technique de 'découpage et superposition' dans l'étape d'accumulation.

6. Procédé de fabrication d'une pièce composite incurvée (1) selon l'une quelconque des revendications 1 à 5, dans lequel au moins une discontinuité (12) pratiquée sur au moins une couche est produite par une technique d' assemblage bout à bout' dans l'étape d'accumulation, les deux extrémités de ladite au moins une discontinuité (12) étant laissées sans superposition directe.

7. Procédé de fabrication d'une pièce composite incurvée (1) selon l'une quelconque des revendications 1 à 6, le procédé comprenant en outre :
- l'accumulation d'une deuxième préforme plate (9) composée d'un ensemble de couches empilées, ladite deuxième préforme (9) étant destinée à former une partie de l'au moins un chapeau externe (3) de la pièce composite incurvée (1) ;
- le pliage dans une étape de façonnage de cette deuxième préforme plate (9) pour qu'elle acquière une courbure adéquate de manière à s'adapter au rebord (7) de la première préforme façonnée (5) ;
- le positionnement de ladite deuxième préforme façonnée (9) sur une face dudit rebord (7) à l'opposé de la bande (6) ; et
- le durcissement au moins des deux préformes façonnées ensemble ;
de telle sorte que cette deuxième préforme (9), une fois durcie, fournit la surface continue (3.1) devant être assemblée au revêtement.

8. Procédé de fabrication d'une pièce composite incurvée (1) selon la revendication 7, dans lequel toutes les couches de la première préforme (5) sont pourvues de la même au moins une discontinuité (12) aux même coordonnées de la zone du rebord (7), les discontinuités correspondantes (12) fournissant une discontinuité traversante à travers la première préforme (5).

9. Procédé de fabrication d'une pièce composite incurvée (1) selon l'une quelconque des revendications 1 à 8, dans lequel au moins une discontinuité (12) présente la forme :
- d'une incision, ou
- d'une découpe telle qu'un type trou de souris ou un espace étroit dépourvu de matériau composite.

10. Procédé de fabrication d'une pièce composite incurvée (1) selon l'une quelconque des revendications 1 à 9, le procédé comprenant en outre :
- l'accumulation d'une troisième préforme plate (10) de façon similaire à ladite première préforme plate (5), composée d'un ensemble de couches empilées, ladite troisième préforme plate (10) étant l'image miroir de ladite première préforme plate (5) ;
- le pliage dans une étape de façonnage de cette troisième préforme plate (10) par sa ligne de pli (10.1) ;
- le positionnement des deux bandes incurvées (6, 11) desdites première (5) et troisième (10) préformes façonnées en appui l'une sur l'autre en faisant contact symétriquement avec des rebords pliés respectifs (7, 13) pointant vers l'extérieur, et la mise en place d'un stratifil composite (15) adapté pour remplir l'espace entre les deux rayons de pliage ; et
- le durcissement au moins des deux préformes façonnées ensemble, de telle sorte qu'une pièce composite incurvée (1) de préférence 'en forme de T', ou 'en forme de L', ou 'en forme de C', ou 'en forme de J', ou 'en forme de H' est fabriquée.

11. Procédé de fabrication d'une pièce composite incurvée selon l'une quelconque des revendications 1 à 10, la pièce composite incurvée (1) comprenant en outre :
un chapeau interne (4) proche de l'extrémité dudit bord interne (2.1) de la bande incurvée (2) ;
le procédé comprenant en outre :
- l'accumulation de la première préforme plate (5), ladite préforme (5) comprenant en outre une ligne de pli auxiliaire (5.2) sensiblement parallèle à l'axe neutre (2.3) de la pièce composite incurvée (1), cette ligne de pli auxiliaire (5.2) divisant la première préforme plate (5) en :
∘ la bande incurvée déjà présente (6), et
∘ un rebord auxiliaire (8) disposé à l'opposé du rebord déjà présent (7), ledit rebord auxiliaire (8) étant destiné à faire partie du chapeau interne (4) de la pièce composite incurvée (1) ;
- l'accumulation d'une quatrième préforme plate (16) composée d'un ensemble de couches empilées, ladite quatrième préforme (16) étant destinée à former une partie du chapeau interne (4) de la pièce composite incurvée (1) ;
- le pliage dans une étape de façonnage :
∘ de la première préforme plate (5) à la fois par la ligne de pli (5.1) et la ligne de pli auxiliaire (5.2) ; et
∘ de cette quatrième préforme plate (16) pour qu'elle acquière une courbure adéquate de manière à s'adapter au rebord auxiliaire (8) de ladite première préforme façonnée (5) ; et
- le positionnement de ladite quatrième préforme façonnée (16) sur une face dudit rebord auxiliaire (8) à l'opposé de la bande (6) de ladite première préforme façonnée (5) ; et
- le durcissement au moins des deux préformes façonnées ensemble, de telle sorte qu'une pièce composite incurvée (1) de préférence 'en forme de H' ou 'en forme de I' est fabriquée.

12. Pièce composite incurvée (1) pouvant être obtenue par le procédé selon l'une quelconque des revendications 1 à 11.

13. Aéronef comprenant une pièce composite incurvée (1) selon la revendication 12.
